# EUROPÄISCHE PATENTANMELDUNG

(11) **EP 0 665 099 A2**
(43) Veröffentlichungstag der Anmeldung: **02.08.1995**
(21) Anmeldenummer: 94115114.4
(22) Anmeldetag: 26.09.1994
(51) Int. Cl.: B29D 31/00, B31F 1/00

(54) **Verfahren und Vorrichtung zur Herstellung von Laminatplatten und danach sowie damit hergestelltes Laminatplatten-Formteil**

(30) Priorität: 14.01.1994 DE 4400885
(71) Anmelder: Steinhoff-Laminat GmbH, 37327 Leinefelde (DE)
(72) Erfinder: Steinhoff, Bruno, D-26655 Westerstede (DE)
(74) Vertreter: Hanewinkel, Lorenz, Dipl.-Phys.

(57) **Zusammenfassung**

Bei dem Verfahren und mit der Vorrichtung zur Herstellung von Laminatplatten (1) aus Recyclingpapier (2) und Leim (3) wird von einer Papierrolle (4) die Papierbahn (5) abgezogen, als Lage (2) gelegt und von der Bahn (5) abgeschnitten und jeweils vor der nächsten Lage (2) mit Leim (3) besprüht und die übereinanderliegenden Lagen (2) werden jeweils durch Druck formstabil zusammengepreßt.

Anschließend wird die mehrlagige Laminatplatte (1) zwischengelagert oder direkt auf Format zugeschnitten.

Danach wird die zugeschnittene Laminatplatte (1) unter Warmverformung zu einem Formteil (1A) gepreßt und ausgehärtet und dann das Formteil (1A) spanabhebend fertigbearbeitet.

## Beschreibung

Die Erfindung bezieht sich auf ein verfahren zur Herstellung von Laminatplatten, welches aus übereinanderliegenden und miteinander verklebten (verleimten) Recyclingpapierlagen gebildet ist und auf eine Vorrichtung zur Durchführung des Verfahrens und auf das hergestellte Laminat-Formteil, insbesondere für Möbelteile.

Die aus der Praxis und auch aus dem druckschriftlichen Stand der Technik (z.B. DE-AS 23 43 975 und DE-U1-82 09 206) bekannten Wickel- und Schichtverfahren für die Herstellung von Laminat-Formteilen sind aufwendig, erfordern eine lange Aushärtezeit, sind somit kostenungünstig und lassen nur begrenzte verformarten zu.

Aufgabe der Erfindung ist es, ein neuartiges Verfahren zur Herstellung von Laminat-Formplatten in einfacher, rationeller und kostengünstiger Schichtweise des Recyclingpapiers und Leimangabe mit guter Formstabilität und kurzer Aushärtezeit sowie sofortiger oder späterer, endgültiger Formgebung und Fertigbearbeitung ermöglicht.

Eine weitere Aufgabe wird in einer rationell arbeitenden Vorrichtung mit automatisch zusammenwirkenden Herstell- und Bearbeitungsstationen mit direktem oder unterbrochenem Durchlauf der Laminatplatten gesehen.

Weiterhin liegt eine weitere Aufgabe in dem besonderen Aufbau der Laminatplatten und der daraus gefertigten Laminat-Formteile und deren Verwendung in der Möbelindustrie als leichte, stabile und preiswerte Möbelteile mit beliebigen Formgebungen und Größen.

Die Verfahrensaufgabe wird durch die kennzeichnenden Merkmale des Patentanspruches 1, die Vorrichtungsaufgabe durch die Merkmale des Patentanspruches 8 und die Formteilaufgabe durch die Merkmale der Patentansprüche 20 und 21 gelöst.

Die dazugehörenden Unteransprüche beinhalten Gestaltungsmerkmale, welche vorteilhafte und förderliche Weiterbildungen der verfahrensgemäßen, vorrichtungsgemäßen und gegenständlichen Aufgabenlösung darstellen.

Die Erfindung hat ein Verfahren und eine danach arbeitende Vorrichtung (Anlage) geschaffen, mit dem Laminatplatten einfach, rationell und mit kurzer Aushärtezeit hergestellt und dann im direkten oder unterbrochenen Durchlauf auf die gewünschte Größe formatiert, anschließend in die gewünschte Form gebracht und danach spanabhebend fertig bearbeitet werden können.

Die gesamte, mehrere Bearbeitungsstationen beinhaltende Vorrichtung ermöglicht eine rationelle und optimale Fertigungs-, Weiterverformungs- und Fertigbearbeitungsweise; das Formteil kann in verschiedenen Größen und Formen hergestellt werden und hat aufgrund seines Aufbaues, seiner Material- und Kleberwahl und Verformbarkeit einen leichten und stabilen Aufbau und eine kostengünstige Gestaltung und ist vielseitig, insbesondere in der Möbelindustrie einsetzbar.

Auf den Zeichnungen ist ein Ausführungsbeispiel der Erfindung dargestellt, welches nachfolgend näher erläutert wird. Es zeigt:
- Fig. 1: eine Seitenansicht eines Teiles einer Laminatplatte aus mehreren Papierlagen und diese verbindenden Leim in der ebenen Herstellungsausführung;
- Fig. 2: eine Seitenansicht eines Teiles der Laminatplatte in nach der Herstellung verformter Ausführung,
- Fig. 3: eine schematische Draufsicht auf eine Vorrichtung (Anlage) zur Herstellung, Formgebung und Bearbeitung der Laminatplatte,
- Fig. 4: eine schematische Seitenansicht einer Plattenlegestation der Vorrichtung nach Fig. 3.

Mit (1) ist eine Laminatplatte bezeichnet, welche aus übereinanderliegenden und miteinander durch Kleber (Leim) (3) verbundenen Papierlagen (2), vorzugsweise Lagen aus Recyclingpapier, gebildet ist.

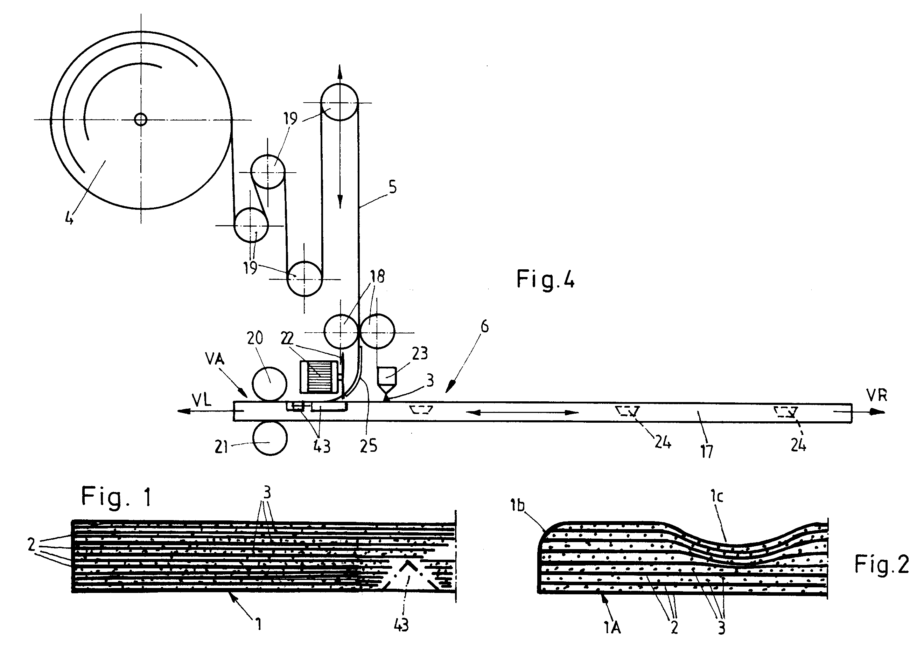

Fig. 1 zeigt die Laminatplatte (1) in der ebenen Herstellungsausführung und Fig. 2 zeigt ein aus der Laminatplatte (1) hergestelltes Formteil (1A); dieses Formteil (1A) kann die verschiedensten Formen haben.

Die Herstellung einer Laminatplatte (1/1A) aus Recyclingpapier (2) und Leim (Kleber) (3) geschieht folgendermaßen:
- Von einer Papierrolle (4) wird die Papierbahn (5) abgezogen, als Lage (2) gelegt und von der Bahn (5) abgeschnitten und jeweils vor der nächsten Lage (2) mit Leim (3) besprüht und die übereinanderliegenden Lagen (2) werden jeweils durch Druck formstabil zusammengepreßt,
- anschließend wird die mehrlagige Laminatplatte (1) zwischengelagert oder direkt auf Format zugeschnitten,
- danach wird die zugeschnittene Laminatplatte (1) unter Warmverformung zu einem Formteil (1A) gepreßt und ausgehärtet,
   und
- dann wird das Formteil (1A) spanabhebend fertigbearbeitet.

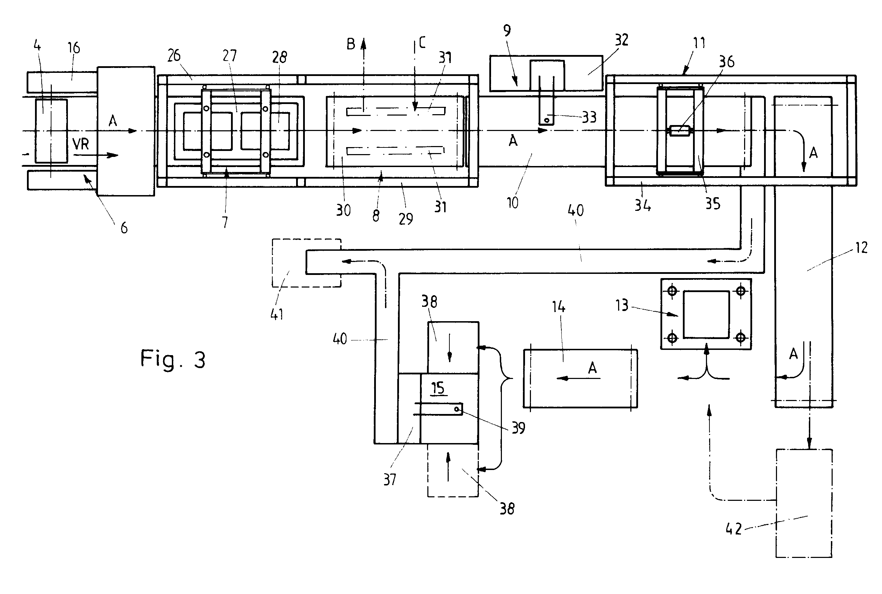

Die Vorrichtung (Anlage) zur Durchführung dieses Verfahrens ist in Fig. 3 und 4 dargestellt und besitzt im Durchlauf (A) nacheinander
- eine Plattenlegestation (6),
- einen Plattentransporteur (7),
- eine Plattenübergabestation (8) zur Pufferung, Ein- und Ausschleusung und zum Weitertransport der Platten (1),
- eine Wasserstrahlschneidstation (9) mit zugeordnetem Schneid- und Transporttisch (10),
- einen Zuschnittransporteur (11) und Förderer (12),
- eine Konturen- oder Formpresse (13),
- einen Transporteur (14) für die Formteile (1A)
   und
- eine Bearbeitungsstation (15) für die Formteile (1A).

Die Plattenlegestation (6) weist in einem Grundgestell (16) einen an Linearführungen hin- und herfahrbaren Legetisch (17) auf.
Das Grundgestell (16) nimmt eine auswechselbare Papierrolle (4) mit zugeordneten, angetriebenen Abzugsrollen (18) und ZugAusgleichsrollen (19) auf.

Im Vorlauf-Anfangsbereich (VA) des Legetisches (17) ist oberhalb desselben eine Pressrolle (20) und unterhalb desselben eine Druckausgleichsrolle (21) angeordnet.

In Legetisch-Vorlaufrichtung (VL) ist oberhalb desselben hinter der Preßrolle (20) ein angetriebenes Schneidmesser (22) angeordnet und dahinter sind Leimauftragsdüsen (23) vorgesehen.

In den Legetisch (17) ist eine Papierklammer (43) zum Halten des Papieranfangs jeder zu legenden Lage (2) und sind Vakuumsauger (24) zur Fixierung der ersten Lage (2) integriert; weiterhin ist dem Legetische (17) ein Papierleitblech (25) für die zuzuführende Bahn (5) zugeordnet, welches sich von den Abzugsrollen (18) bogenförmig nach unten zum Schneidmesser (22) hin erstreckt.

Der der Plattenlegestation (6) nachgeschaltete Plattentransporteur (7) für die Förderung jeder in der Plattenlegestation (6) fertiggestellten Laminatplatte (1) zur Plattenübergabestation (8) zeigt in einem Grundgestell (26) eine linear verfahrbare, angetriebene Fahrkatze (27) mit Vakuumsaugern (28).

Die dem Plattentransporteur (7) nachgeschaltete Plattenübergabestation (8) besitzt in einem Grundgestell (29) eine angetriebene Rollenbahn (30) mit integriertem heb- und senkbaren, quer zur Rollenbahn (30) arbeitenden Förderrollen (31).

Die zwischen Plattenübergabestation (8) und Zuschnittransporteur (11) angeordnete Wasserstrahlschneidstation (9) hat an einem Grundgestell (32) auf X-Y-Achsen oberhalb des Schneid- und Transporttisches (10) verfahrbare Schneidköpfe (33) und beinhaltet eine Hochdruckwasseraufbereitungsanlage; der Schneid- und Transporttisch (10) weist in einem Grundgestell Auflage- und Transportmittel wie Rollen, Ketten, auswechselbare Tragaufnahmen für die zu schneidenden Platten (1) und einen Wasserauffangbehälter für das Schneidwasser auf.

Der Zuschnittransporteur (11) besitzt an einem Grundgestell (34) eine längs- und querverfahrbare, angetriebene Fahrkatze (35) mit Vakuumsaugern (36) zur Aufnahme der zugeschnittenen Platten (1) von dem Schneid- und Transporttisch (10) und zum Transport der Platten (1) zu den in gerader Verlängerung oder winklig zum Zuschnittransporteur (11) sich anschließenden von einer angetriebenen, getakteten Stau-Förderrollenbahn gebildeten Förderer (12). Der Schneid- und Transporttisch (10) ragt in den Zuschnittransporteur (11) hinein, so daß die darin geförderten Platten (1) von der Fahrkatze (35) mit ihren Saugern (36) aufgenommen werden können.

Die Konturen- und Formpresse (13) ist von einer hydraulischen Mehrsäulen-Ständerpresse mit beheizbaren Werkzeugträgerplatten und daran auswechselbar festlegbaren Formwerkzeugen aus wärmeleitfähigem Material gebildet.

Der zwischen der Konturen- und Formpresse (13) und der Bearbeitungsstation (15) angeordnete Transporteur (14) ist von einer angetriebenen getakteten Stau-Förderrollenbahn gebildet.

Die Bearbeitungsstation (15) weist in einem Maschinengestell (37) einen in zwei Formteil-Beladestellungen wechselweise verfahrbaren Schiebetisch (38) mit Formteil-Spannelementen und auf X-Y-Achsen verfahrbare und um eine dritte Achse schwenkbare Werkzeuge (39), wie Fräser, Bohrer, Schleifscheiben o. dgl. auf.

Vom Schneid- und Transporttisch (10) und von der Bearbeitungsstation (15) ist ein Abfalltransport (40) zu einem Abfall-Sammelbehälter (41) geführt.

Mit (42) ist eine zwischen Förderer (12) und Konturen- und Formpresse (13) angeordnete Aufwärmstation, wie Wärmetunnel, für die zwischengelagerten Laminatplatten (1) bezeichnet.

Das Herstellungsverfahren läuft wie folgt ab:
die Recyclingpapierrolle (4) wird mit einem Gabelstapler in eine achslose Abrolleinrichtung der Plattenlegestation (6) eingesetzt. Der Papieranfang wird erstmalig manuell durch die Rollensätze (19, 18) gezogen und in die Papierklammer (43) des Legetisches (17) eingesetzt. Der Legetisch (17) nimmt die Ausgangsstellung (VA) nach Fig. 4 ein.

Mit den Rollensätzen (18, 19) erfolgt das gleichmäßige Abwickeln und Abziehen der Papierbahn (5) von der Rolle (4) in Abhängigkeit von der Fahrgeschwindigkeit des Legetisches (17). Der Legetisch (17) fährt in Vorlaufrichtung (VL) -auf einem linearen Verfahrweg- und dabei wird die erste Papierlage (2) gelegt, die dann am Vorlaufende durch das querverfahrbare Schneidmesser (22) von der Bahn (5) abgeschnitten und durch die integrierten Vakuumsauger (24) gehalten wird. Der Legetisch (17) fährt dann in Pfeilrichtung (VR) und in die Ausgangsstellung (VA) nach Fig. 4 zurück. Der Tisch (17) fährt taktweise und zwar vor, die Lage (2) wird gelegt, der Tisch (17) hält an, die Lage (2) wird abgeschnitten und der Tisch (17) fährt zurück.

Der nächste Papieranfang wird automatisch über das Papierleitblech (25) in die Papierklammer (43) eingezogen und der nächste Legevorgang kann beginnen, wobei hierbei gleichzeitig mit den Sprühdüsen (23) auf die untere Lage (2) vor dem Fügen des Papiers Leim (3) aufgesprüht wird.

Mit der Anpreßrolle (20) und der Druckausgleichsrolle (21) wird die jeweilige Papierlage (2) automatisch auf die zuvor gelegte Lage (2) aufgepreßt.

Bei diesem Zusammenpressen erfolgt eine Formstabilisierung der Platte (1) und ein Vernetzen des Leimes (3).

Sobald die Laminatplatte (1) entsprechend dem vorgegebenen Programm -der gewünschten Lagenanzahl- gefertigt ist, wird sie automatisch vom Legetisch (17) durch den Plattentransporteur (7) abgenommen. Der Legetisch (17) fährt in die Ausgangslage (VA) zurück und die nächste automatische Plattenfertigung wird gestartet.

Mit den Vakuumsaugern (28) des Plattentransporteurs (7) wird die fertige Laminatplatte (1) vom Legetisch (17) abgenommen und durch die Fahrkatze (27) in Längsrichtung zur Plattenübergabe (8) transportiert und auf derselben abgelegt.

Der Plattentransporteur (7) fährt in die Bereitstellungsposition zur Aufnahme der nächsten Laminatplatte (1) zurück.

Die Plattenübergabe (8) dient als Pufferplatz und als Zuführeinheit zum Schneid- und Transporttisch (10) für die sofortige Weiterbearbeitung der Laminatplatte (1).

Die Laminatplatten (1) können aber auch durch die heb- und senkbaren Förderrollen (31) aus der Plattenübergabe (8) seitlich in Pfeilrichtung (B) ausgeschleust und einer Zwischenlagerung zugeführt werden.

Die mit der Plattenübergabe (8) dem Schneid- und Transporttisch (10) zugeführte Laminatplatte (1) wird von auswechselbaren Aufnahmen des Tisches (10) im Gleichlauf übernommen und automatisch in die Schneidposition transportiert. Die zuvor hergestellten Zuschnitte werden gleichzeitig in die Übergabeposition des Zuschnittransporteurs (11) transportiert.

Der Zuschnittabfall wird beim Vorfahren des Transporttisches (10) automatisch auf ein Abfallentsorgungsband des Abfalltransporters (40) gebracht.

Sobald die Laminatplatte (1) mit dem Schneid- und Transporttisch (10) in Schneidposition angelangt ist, wird automatisch der Wasserstrahlschneider (9) gestartet. Die beiden Schneidköpfe (33) arbeiten syncron auf je einer Plattenhälfte und erstellen somit die Zuschnitte gemäß den vorgegebenen Maßen. Das Schneidwasser wird in dem Wasserauffangbehälter aufgefangen und über einen Überlauf abgeführt.

Der Zuschnittransporteur (11) für den Transport der zugeschnittenen Platten (1) von dem Transporttisch (10) zu dem Förderer (12) fährt mit seiner Fahrkatze (35) auf den X-Y-Linearachsen zu den zugeschnittenen Plattenteilen, die Vakuumsauger (36) senken ab und übernehmen den Zuschnitt. Die Zuschnitte werden auf dem Förderer (12) gestapelt.

Die mit dem Zuschnittransporteur (11) gebildeten Stapel werden mit dem Staurollenförderer (12), sobald die vorgegebene Stapelhöhe erreicht ist, abtransportiert. Die Stapel werden automatisch zu dem Ende des Förderers (12) transportiert und können hier von der Bedienperson der hydraulischen Presse (13) abgenommen werden.

Nachdem die Presse (13) eingerichtet ist und die Werkzeuge die erforderliche Arbeitstemperatur erreicht haben, legt die Bedienperson den ersten Zuschnitt ein und führt mit der Zweihandbedienung die Presse (13) zu.

Nach einer einzustellenden Preßzeit öffnet die Presse (13) automatisch. Die Bedienperson entnimmt das Formteil (1A) und bringt es auf den Transporteur (14) zum Transport zu der Bearbeitungsstation (15).

Bei kleineren Formteilen können mehrere Werkzeuge gleicher oder ähnlicher Form eingesetzt werden. Zur Leistungsoptimierung sollte dann gegebenenfalls eine zweite Bedienperson eingesetzt werden.

Die zu bearbeitenden Formpreßteile (1A) werden von der Bedienperson in die jeweilig freien Aufnahmen des Schiebetisches (38) der Bearbeitungsstation (15) gebracht. Durch Tasterbetätigung werden die pneumatischen Klemmer der Aufnahmen geschlossen und gleichzeitig das Teil zur Bearbeitung freigegeben. Der Schiebetisch (38) fährt in Bearbeitungsposition und die automatische Bearbeitung wird entsprechend einem vorgegebenen Programm ausgeführt.

Während des automatischen Bearbeitens kann die Bedienperson von dem zweiten Werkstückträger das zuvor bearbeitete Teil entnehmen, ein neues Teil auflegen und die Bearbeitung freigeben.

Der Abfalltransporteur (40) bringt auch die in der Bearbeitungsstation (15) anfallenden Abfälle, Späne o. dgl. zu dem Sammelbehälter (41).

Die Werkzeuge in der Presse (13) können beheizt werden, bei ausgehärteten Plattenzuschnitten oder gekühlt werden bei vorher erwärmten Plattenzuschnitten.

In den Werkzeugen lassen sich dabei Kanäle für ein Heiz- oder Kühlmedium, wie Öl, vorsehen und diese Werkzeuge werden thermostatgesteuert.

Die zwischengelagerten ausgehärteten Laminatplatten (1) werden in Pfeilrichtung (C) wieder in die Plattenübergabe (8) eingeschleust und durchlaufen dann die gleichen Stationen (9 bis 15), wobei sie vor dem Einbringen in die Presse (13) eine Aufwärmstation (42) durchlaufen.

Für die Verformung der Laminatplatten (1) können in diese noch Gehrungsnuten oder Stauchschnitte (43) eingebracht sein.

In den Leim (Kleber) (3) läßt sich in bevorzugter Weise ein Härter einbringen, wobei der Kleber im Sprühstrahl außerhalb der Sprühköpfe (23) mit dem Härter vermischt und gemeinsamen aufgetragen wird.

Der Härter bewirkt ein schnelleres Formstabilisieren (Klebervernetzen) der Laminatplatte (1), wodurch die Trockenzeit stark verringert wird und die Platte (1) sofort weiterverarbeitet werden kann.

Der Kleber und Härter kann für die Verformung der Platte (1) erweicht werden.

Wird eine verleimte Laminatplatte ohne Härter im Kleber in Wasser gelegt, dann löst sich der Kleber schon bei kurzer Feuchtigkeitsaufnahme auf, und die Papierlagen (2) fallen entlang der Kleberschichten (3) auseinander.

Eine durch einen Kleber mit Härter verleimt Laminatplatte (1) hat eine wesentlich längere Standzeit, da sich der Kleber auch bei langer Feuchtigkeitsaufnahme nicht auflöst und somit die Papierlagen nicht auseinander fallen, sondern sich das Papier selbst nach langer Liegezeit im Wasser auflöst.

Die Laminatplatte läßt sich als ebene Platte (1) gemäß Fig. 1 oder als verformte Platte (1A) gemäß Fig. 2 mit abgerundetem Rand (1b), eingezogener Formgebung (1C), Konturenoberfläche u. dgl. ausbilden und für Möbelteile der verschiedensten Art, wie Gestellteile, Rücken- und Armlehnen-Unterbauten, Tischplatten, Wand- und Deckenteilen o. dgl. einsetzen.

Die Laminatplatte (1, 1A ) besteht aus Recyclingpapier mit folgenden Mittelwerten:
- Papierstärke = 0,53 mm
- Papiergewicht = 330g/m²
- Bruchlast, trocken:
   quer = 63 N/15 mm
   längs = 296 N/15 mm
- Dehnung, trocken:
   quer = 1,67%
   längs = 1,5%
(diese Prozentwerte wurden an einem Probestück mit einer Länge von 150 mm ermittelt, wobei eine Querdehnung von 2,51 mm und eine Längsdehnung von 2,25 mm entstand, was den vorstehenden Prozentwerten entspricht).
- Steifigkeit:
   quer = 1,164 mN
   längs = 3,338 mN
bei einer Zusammensetzung
aus 50% Holzschliff (Fichte, Tanne)
20% Laubholzsulfat (Buche, Birke, Pappel, Eukalyptus)
30% Nadelholzsulfat (Fichte, Kiefer, Douglasie)
und aus einem Dispersionsleim mit einem Kleberauftrag von 30 - 40 g/m² und mit einer Verformungstemperatur von ca. 130° C und einer Formstabilhaltung beim Abkühlen auf ca. 90° C.

Der Dispersionsleim hat folgende physikalischen Eigenschaften:
- Typ:: Polyvinylacetat-acrylat-Copolymer
- Viskosität(Brookfield RVT, 25° C):: ca. 5000 mPa · sec.
- Trockengehalt:: ca. 50%
- Härtedosierung:: 5% Gewichtsanteile 4% Volumenanteile
- Reinigung:: mit warmen Wasser
Als Härter wird ein handelsüblicher Härter eingesetzt, z.B. in Form einer wässrigen Aluminiumchlorid-Lösung.

## Patentansprüche

1. Verfahren zur Herstellung von Laminatplatten aus Recyclingpapier und Leim (Kleber), dadurch gekennzeichnet, daß
- von einer Papierrolle (4) die Papierbahn (5) abgezogen, als Lage (2) gelegt und von der Bahn (5) abgeschnitten und jeweils vor der nächsten Lage (2) mit Leim (3) besprüht und die übereinanderliegenden Lagen (2) werden jeweils durch Druck formstabil zusammengepreßt werden,
- anschließend die mehrlagige Laminatplatte (1) zwischengelagert oder direkt auf Format zugeschnitten wird,
- danach die zugeschnittene Laminatplatte (1) unter Warmverformung zu einem Formteil (1A) gepreßt und ausgehärtet wird,
und
- dann das Formteil (1A) spanabhebend fertigbearbeitet wird.

2. Verfahren nach Anspruch 1, dadurch gekennzeichnet, daß das Lagenlegen und Leimaufsprühen auf einem linearen Verfahrweg erfolgt, dabei beim Vorlauf (VL) das Leimaufsprühen auf jeweils die untere Lage (2) durchgeführt und gleichzeitig die nachfolgende Lage (2) auf die Leimschicht (3) gelegt und am Vorlaufende abgeschnitten wird und bei diesem Vorlauf (VL) die Druckeinwirkung auf die gelegten Lagen (2) und die zu legende Lage (2) erfolgt und der Rücklauf (VR) einen Leerlauf ergibt.

3. Verfahren nach einem der Ansprüche 1 oder 2, dadurch gekennzeichnet, daß dem Leim vor dem Aufsprühen ein Härter zugegeben wird.

4. Verfahren nach einem der Ansprüche 1 bis 3, dadurch gekennzeichnet, daß die Laminatplatte (1) durch Wasserstrahlschneiden auf Format geschnitten wird.

5. Verfahren nach einem der Ansprüche 1 bis 4, dadurch gekennzeichnet, daß die formatierte Laminatplatte (1) zwischen beheizten und/oder gekühlten Werkzeugen einer Konturen- oder Formenpresse (13) zum Formteil (1A) geformt und ausgehärtet wird.

6. Verfahren nach einem der Ansprüche 1 bis 5, dadurch gekennzeichnet, daß die zwischengelagerte Laminatplatte (1) auf Format geschnitten, anschließend erwärmt und dann formoder konturengepreßt und ausgehärtet wird.

7. Verfahren nach einem der Ansprüche 1 bis 5, dadurch gekennzeichnet, daß für die Verformung der Laminatplatte (1) in dieselbe Gehrungsnuten (43) und/oder Stauchschnitte (43) eingebracht werden.

8. Vorrichtung zur Durchführung des Verfahrens nach einem oder mehreren der vorstehenden Ansprüche zur Herstellung der Laminatplatte und des Formteiles daraus,
dadurch gekennzeichnet, daß im Durchlauf (A) nacheinander
- eine Plattenlegestation (6),
- ein Plattentransporteur (7),
- eine Plattenübergabestation (8) zur Pufferung, Ein- und Ausschleusung und zum Weitertransport der Platten (1),
- eine Wasserstrahlschneidstation (9) mit zugeordnetem Schneid- und Transporttisch (10),
- ein Zuschnittransporteur (11) und Förderer (12),
- eine Konturen- oder Formpresse (13),
- ein Transporteur (14) für die Formteile (1A)
und
- eine Bearbeitungsstation (15) für die Formteile (1A)
angeordnet sind.

9. Vorrichtung nach Anspruch 8, dadurch gekennzeichnet, daß die Plattenlegestation (6) in einem Grundgestell (16)
- einen an Linearführungen hin- und herfahrbaren Legetisch (17) aufweist,
- eine auswechselbare Papierrolle (4) mit zugeordneten, angetriebenen Abzugsrollen (18) und Zug-Ausgleichsrollen (19) aufnimmt,
- im Vorlauf-Anfangsbereich (VA) des Legetisches (17) oberhalb desselben eine Pressrolle (20) und unterhalb desselben eine Druckausgleichsrolle (21) angeordnet sind,
- in Legetisch-Vorlaufrichtung (VL) oberhalb desselben hinter der Pressrolle (20) ein angetriebenes Schneidmesser (22) und dahinter Leimauftragsdüsen (23) vorgesehen sind.

10. Vorrichtung nach Anspruch 8 oder 9, dadurch gekennzeichnet, daß der Legetisch (17) eine Papierklammer (43) zum Halten des Papieranfangs jeder zu legenden Lage (2) und Vakuumsauger (24) zur Fixierung der ersten Lage (2) aufweist.

11. Vorrichtung nach einem der Ansprüche 8 bis 10, dadurch gekennzeichnet, daß der der Plattenlegestation nachgeschaltete Plattentransporteur (7) für die Förderung der in der Plattenlegestation (6) fertiggestellten Laminatplatte (1) zur Plattenübergabestation (8) in einem Grundgestell (26) eine linear verfahrbare, angetriebene Fahrkatze (27) mit Vakuumsaugern (28) aufweist.

12. Vorrichtung nach einem der Ansprüche 8 bis 11, dadurch gekennzeichnet, daß die dem Plattentransporteur (7) nachgeschaltete Plattenübergabestation (8) in einem Grundgestell (29) eine angetriebene Rollenbahn (30) mit integriertem heb- und senkbaren, quer zur Rollenbahn (30) arbeitenden Förderrollen (31) besitzt.

13. Vorrichtung nach einem der Ansprüche 8 bis 12, dadurch gekennzeichnet, daß die zwischen Plattenübergabestation (8) und Zuschnittransporteur (11) angeordnete Wasserstrahlschneidstation (9) an einem Grundgestell (32) auf X-Y-Achsen oberhalb des Schneid- und Transporttisches (10) verfahrbare Schneidköpfe (33) und eine Hochdruckwasseraufbereitungsanlage aufweist und der Schneid- und Transporttisch (10) in einem Grundgestell Auflage- und Transportmittel, wie Rollen, Ketten, auswechselbaren Tragaufnahmen für die zu schneidenden Platten (1) und einen Wasserauffangbehälter für das Schneidwasser besitzt.

14. Vorrichtung nach einem der Ansprüche 8 bis 13, dadurch gekennzeichnet, daß der Zuschnittransporteur (11) an einem Grundgestell (34) eine längs- und querverfahrbare, angetriebene Fahrkatze (35) mit Vakuumsaugern (36) zur Aufnahme der zugeschnittenen Platten (1) von dem Schneid- und Transporttisch (10) und zum Transport der Platten (1) zu dem in gerader Verlängerung oder winklig zum Zuschnittransporteur (11) sich anschließenden, von einer angetriebenen, getakteten Stau-Förderrollenbahn gebildeten Förderer (12) aufweist.

15. Vorrichtung nach einem der Ansprüche 8 bis 14, dadurch gekennzeichnet, daß die Konturen- und Formpresse (13) von einer hydraulischen Mehrsäulen-Ständerpresse mit beheizbaren Werkzeugträgerplatten und daran auswechselbar festlegbaren Formwerkzeugen aus wärmeleitfähigem Material gebildet ist.

16. Vorrichtung nach einem der Ansprüche 8 bis 15, dadurch gekennzeichnet, daß der zwischen Konturen- und Formpresse (13) und der Bearbeitungsstation (15) angeordnete Transporteur (14) von einer angetriebenen getakteten Stau-Förderrollenbahn gebildet ist.

17. Vorrichtung nach einem der Ansprüche 8 bis 16, dadurch gekennzeichnet, daß die Bearbeitungsstation (15) in einem Maschinengestell (37) einen in zwei Formteil-Beladestellungen wechselweise verfahrbaren Schiebetisch (38) mit Formteil-Spannelementen und auf X-Y-Achsen verfahrbare und eine dritte Achse schwenkbare Werkzeuge, wie Fräser, Bohrer, Schleifscheiben o. dgl. aufweist.

18. Vorrichtung nach einem der Ansprüche 8 bis 17, dadurch gekennzeichnet, daß vom Schneid- und Transporttisch (10) und von der Bearbeitungsstation (15) ein Abfalltransport (40) zu einem Abfall-Sammelbehälter (41) geführt ist.

19. Vorrichtung nach einem der Ansprüche 8 bis 18, dadurch gekennzeichnet, daß zwischen Förderer (12) und Konturen- und Formpresse (13) eine Aufwärmstation (42), wie Wärmetunnel, für die zwischengelagerten Laminatplatten (1) eingeschaltet ist.

20. Laminat-Formteil, hergestellt nach einem oder mehreren der vorstehenden Ansprüche, dadurch gekennzeichnet, daß dasselbe als ebene Platte (1), als Platte (1) mit abgebogenen Rändern (1b), als Platte mit Konturen und Verformungen (1c) für Möbelteile, vorzugsweise Gestellteile, Rücken- oder Armlehnen-Unterbauten, Tischplatten, Wand- und Deckenteile o. dgl. ausgebildet ist.

21. Laminat-Formteil nach einem oder mehreren der vorstehenden Ansprüche, dadurch gekennzeichnet, daß dasselbe als Platte aus mehreren Papierlagen (2) und einem diese formhaltenden und verbindenden Kleber (3) oder Kleber mit die Netzzeit verkürzendem Härter ausgebildet ist.
